# EUROPEAN PATENT APPLICATION

(11) **EP 1 525 938 A1**
(43) Date of publication of application: **27.04.2005**
(21) Application number: 04256145.6
(22) Date of filing: 04.10.2004
(51) Int. Cl.: B23D 45/04, B23D 47/02

(54) **Miter saw**

(30) Priority: 23.10.2003 CN 200310106135
(71) Applicant: Positec Power Tools (Suzhou) Co., Ltd., Suzhou 215006 (CN)
(72) Inventor: Shaodong, Chen, Suzhou 215006 (CN)
(74) Representative: Stuttard, Garry Philip

(57) **Abstract**

The present invention relates to a miter saw including a base (1), a turntable (2), a first rotary shaft (3) for connecting the base to the turntable, a supporting arm (4) and a saw unit (5). Two micro-adjusting and locking mechanisms (6,6') which are similar in structure are used to accurately position and reliably lock either or both of the supporting arm or turntable. Each micro-adjusting and locking mechanism has a wormgear (10,10') which is fixed, a worm (8,8'), a micro-adjusting handle (14,14') which is connected to the worm, an eccentric sleeve (9,9'), an actuator such as a lock-release knob which is connected to the eccentric sleeve and a torsion spring. An axis of the worm is parallel to but not overlapping the axis of the eccentric sleeve. The worm is engaged with the wormgear when the micro-adjusting and locking mechanism is in a first working state. The worm is disengaged from the wormgear when the micro-adjusting and locking mechanism is in a second working state. In this way, the present invention offers secure locking and precise positioning of the turntable and/or of the supporting arm.

## Description

The present invention relates to a power tool (in particular to a miter saw) having one or more micro-adjusting and locking mechanisms.

A known miter saw comprises a base for positioning a workpiece, a turntable which is mounted on the base and is rotatable about the axis of the base and a supporting arm pivotally mounted in a vertical plane of the turntable or mounted in the turntable via sliding bars. The supporting arm is pivotable relative to the turntable in a plane perpendicular to the turntable. The saw unit includes a motor and a blade driven by the motor to cut the workpiece. In general, a scale is located in the base to indicate the pivot angle of the turntable. A positioning means includes a detent claw disposed in one of the turntable and the base, together with a detent recess disposed in a preset position in the other one of the turntable and the base. The preset position secured by a lever is disposed between the turntable and the base and indicates an angle of the turntable relative to the base such as 0, 15° or 22.5°.

The detent claw of the conventional positioning means slides easily into the recess when the detent claw is close to the detent recess. However positioning the positioning means leads to inaccuracies and it is difficult to make micro-adjustments at small angles. Clamping after positioning may cause the preset angle to offset. In addition, inaccurate cutting may occur because of non-clamping of the positioning means.

Alternatively, it is known to set the position of the supporting arm manually by turning the saw unit to an approximate angle indicated by the scale. The supporting arm is threadedly locked by the rotary shaft or a screw and retained accurately by frictional forces generated by a locking mechanism. However positioning in this manner is subject to inaccuracies and it is difficult to make micro-adjustments. The working position of the saw unit will be offset because the frictional force of the locking mechanism is insufficient to overcome its own weight thereby causing the saw unit to cut the workpiece inaccurately.

The present invention seeks to overcome the shortcomings of a conventional miter saw by exploiting micro-adjusting and locking means for accurate positioning and reliable locking of either or both of the supporting arm or turntable.

Thus viewed from one aspect the present invention provides a miter saw comprising:
a base;
a turntable pivotally coupled to the base and capable of adopting a first working state in which the turntable is locked to prevent manual rotary adjustment relative to the base and a second working state in which the turntable is unlocked to permit manual rotary adjustment relative to the base;
a first rotary shaft pivotally coupling the turntable with the base;
a saw unit;
a supporting arm supporting the saw unit; and
a first micro-adjusting and locking mechanism comprising:
   a first wormgear fixed to the base and coaxially mounted on the first rotary shaft,
   a first worm engageable with the first wormgear, wherein in the first working state the first worm is engaged with the first wormgear to lock the turntable and in the second working state the first worm is disengaged from the first wormgear to unlock the turntable,
   a first micro-adjusting handle connected to the first worm and capable of rotary micro-adjustment of the turntable relative to the base in the first working state,
   a first eccentric sleeve mounted eccentrically on the first worm such that the axis of the first eccentric sleeve is parallel to and non-coincident with the axis of the first worm and
   a first actuator for actuating the first worm between the first working state and the second working state.

In one embodiment of the invention the miter saw includes a base, a turntable, a first rotary shaft joining the base with the turntable, a supporting arm and a saw unit. It further comprises a first micro-adjusting and locking mechanism itself comprising a first wormgear which is fixed to the base, a first worm, a first micro-adjusting handle which is connected to the first worm, a first eccentric sleeve, a first actuator (such as a first lock-release knob) which is connected to the first eccentric sleeve and a first elastic element (*eg* first torsion spring). The first wormgear is coaxially disposed on the first rotary shaft. The first worm is rotatably inserted into the first eccentric sleeve. An axis of the first worm is parallel to but not overlapping the axis of the first eccentric sleeve. The first elastic element is disposed between the turntable and the first lock-release knob. The first worm is engaged with the first wormgear when the first micro-adjusting and locking mechanism is in a first working state. The first worm is disengaged from the first wormgear when the first micro-adjusting and locking mechanism is in a second working state.

By releasing the turntable in the second working state the operator is able to manually adjust the position of the turntable relative to the base. In the desired position, the turntable may be locked again in the first working state. Micro-adjustment of the position of the turntable relative to the base in the first working state is possible by manipulating the first micro-adjusting handle.

The first worm is typically a first elongate worm. Preferably between the first working state and the second working state, the axis of the first worm diverges in a parallel manner from the axis of the first rotary shaft. Particularly preferably the axis of the first worm arcs away from the axis of the first rotary shaft. Preferably in the first working state the axis of the first worm and the axis of the first eccentric sleeve are in a common plane substantially parallel to the turntable. Preferably in the second working state the axis of the first worm and the axis of the first eccentric sleeve are in a common plane substantially perpendicular to the turntable.

Preferably the first eccentric sleeve is rotatably connected to the turntable.

Preferably the first elastic element is a torsion spring, one end of which is connected to the turntable and the other end of which is connected to the first eccentric sleeve or the first actuator.

Preferably the first actuator is fixed to the first eccentric sleeve.

In a preferred embodiment, the miter saw further comprises:
a shoulder formed on the first eccentric sleeve and
a recess formed in the first actuator for latching the shoulder.

In a preferred embodiment, the miter saw further comprises:
a sleeve disposed in the turntable, wherein the sleeve is slidably mounted on the first rotary shaft and the first wormgear is fixed to the sleeve.

Preferably the first actuator is mounted coaxially on the first eccentric sleeve.

Generally the supporting arm is pivotable relative to the turntable in a plane perpendicular to the turntable. The supporting arm may be connected to the base or turntable.

The first micro-adjusting handle may be connected coaxially to a distal end of the first worm.

The first elastic element may bias the first actuator from the position in which it actuates the first worm into the second working state to the position in which the first worm is in the first working state.

Viewed from a further aspect the present invention provides a miter saw comprising:
a base;
a turntable pivotally coupled to the base;
a first rotary shaft pivotally coupling the turntable with the base;
a saw unit;
a supporting arm supporting the saw unit, wherein the supporting arm is
capable of adopting a first operating state in which the supporting arm is
locked to prevent manual rotary adjustment relative to the turntable and a
second operating state in which the supporting arm is unlocked to permit
manual rotary adjustment relative to the turntable
a second rotary shaft pivotally coupling the supporting arm with the turntable; and
a second micro-adjusting and locking mechanism comprising:
   a second wormgear fixed to the second rotary shaft and coaxially mounted on the second rotary shaft,
   a second worm engageable with the second wormgear, wherein in the first operating state the second worm is engaged with the second wormgear to lock the supporting arm and in the second operating state the second worm is disengaged from the second wormgear to unlock the supporting arm,
   a second micro-adjusting handle connected to the second worm and capable of rotary micro-adjustment of supporting arm relative to the turntable in the first operating state,
   a second eccentric sleeve mounted eccentrically on the second worm such that the axis of the second eccentric sleeve is parallel to and non-coincident with the axis of the second worm and
   a second actuator connected to the second eccentric sleeve for actuating the second worm between the first operating state and the second operating state.

In one embodiment of the invention the miter saw includes a base, a turntable, a second rotary shaft, a supporting arm which is pivotally connected to the second rotary shaft and a saw unit. It further comprises a second micro-adjusting and locking mechanism itself comprising a second wormgear which is fixed to the second rotation shaft, a second worm, a second micro-adjusting handle which is disposed on the second worm, a second eccentric sleeve, a second actuator (such as a second lock-release knob) which is connected to the second eccentric sleeve and a second elastic element (*eg* a torsion spring) which is disposed between the supporting arm and the second actuator. The second wormgear is coaxially disposed on the second rotary shaft. The second worm is rotatably inserted into the second eccentric sleeve. The axis of the second worm is parallel to but not overlapping the axis of the second eccentric sleeve. The second worm is engaged with the second wormgear when the second micro-adjusting and locking mechanism is in a first operating state. The second worm is disengaged from the second wormgear when the second micro-adjusting and locking mechanism is in a second operating state.

By releasing the supporting arm in the second operating state the operator is able to manually adjust the position of the supporting arm relative to the turntable. In the desired position, the supporting arm may be locked again in the first operating state. Micro-adjustment of the position of the supporting arm relative to the turntable in the first operating state is possible by manipulating the second micro-adjusting handle.

The second worm is typically a second elongate worm. Preferably between the first operating state and the second operating state, the axis of the second worm diverges in a parallel manner from the axis of the second rotary shaft. Particularly preferably the axis of the second worm arcs away from the axis of the second rotary shaft. Preferably in the first operating state the axis of the second worm and the axis of the second eccentric sleeve are in a common plane substantially parallel to the supporting arm. Preferably in the second operating state the axis of the second worm and the axis of the second eccentric sleeve are in a common plane substantially perpendicular to the supporting arm.

Preferably the second eccentric sleeve is rotatably connected to the turntable.

Preferably the second elastic element is a torsion spring, one end of which is connected to the turntable and the other end of which is connected to the second eccentric sleeve or the second actuator.

Preferably the second actuator is fixed to the second eccentric sleeve.

Preferably the miter saw further comprises:
a shoulder formed on the second eccentric sleeve and
a recess formed in the second actuator for latching the shoulder.

Preferably the second actuator is mounted coaxially on the second eccentric sleeve.

Preferably a supporting sleeve is disposed on the second worm.

The second elastic element may bias the second actuator from the position in which it actuates the second worm into the second operating state to the position in which the second worm is in the first operating state.

The second micro-adjusting handle may be connected coaxially to a distal end of the second worm.

The present invention exploits the engagement of a wormgear with a worm to offer secure locking and precise positioning of the turntable and/or of the supporting arm. In the meantime, the micro-adjusting handle offers fine rotary adjustment of the turntable and/or the supporting arm.

The present invention will now be described in a non-limitative sense with reference to the accompanying Figures in which:
Figure 1 shows a side view of an embodiment of the miter saw according to the present invention;
Figure 2 shows a top view of the embodiment of the miter saw according to the present invention without the saw unit and parts of the supporting arm;
Figure 3 shows an enlarged sectional view of Figure 2 along the direction A-A;
Figure 4 shows a sectional view of Figure 3 along the direction of axis X1 when the micro-adjusting and locking mechanism is in a locked state;
Figure 5 shows a sectional view of Figure 3 along the direction of axis X1 when the micro-adjusting and locking mechanism is in an unlocked state;
Figure 6 shows a sectional view of Figure 1 along the direction C-C;
Figure 7 shows a sectional view of Figure 6 along the direction B-B;
Figure 8 shows a sectional view of Figure 6 along the direction D-D, when the wormgear is in an engaged state; and
Figure 9 shows a sectional view of Figure 6 along the direction D-D, when the wormgear is in a disengaged state.

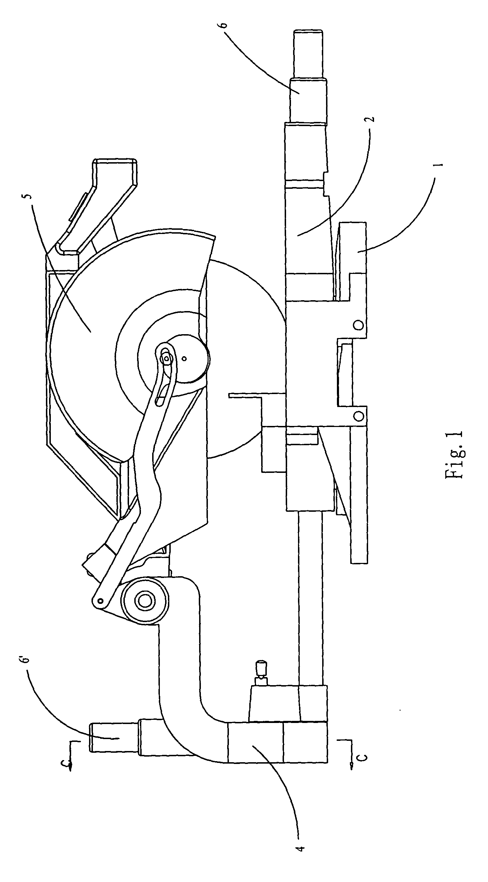

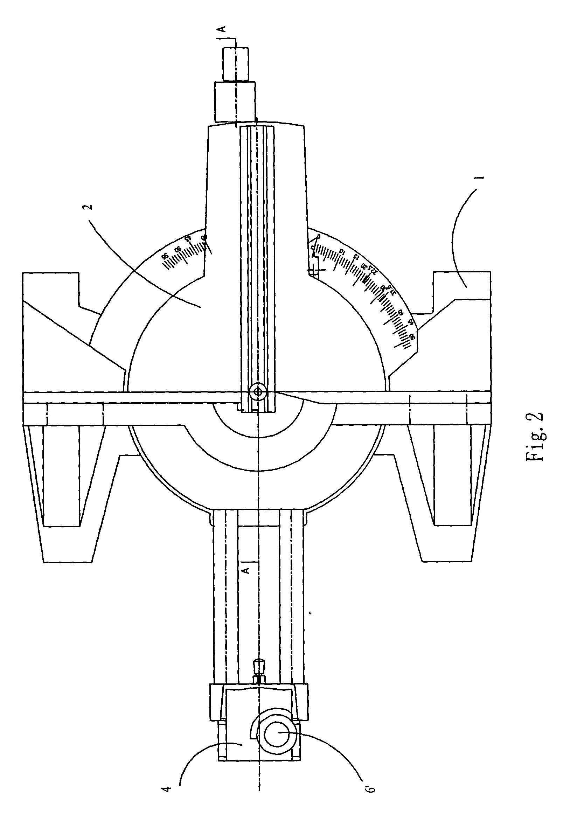

Referring to figures 1, 2 and 3, a miter saw includes a base 1 and a turntable 2 pivotally mounted on the base 1 about a first rotary shaft 3 joined to the base 1 and to the turntable 2. A sleeve 15 is integrally formed in the turntable 2 and intimately encloses the rotary shaft 3. A supporting arm 4 is connected to a saw unit 5 for cutting a workpiece. First and second micro-adjusting and locking mechanisms 6 and 6' are disposed in the turntable 2 and the supporting arm 4 respectively.

The angle of the turntable 2 relative to the base 1 may be manually adjusted by the operator according to the demands of the workpiece and locked in position by the first micro-adjusting and locking mechanism 6. The first micro-adjusting and locking mechanism 6 comprises a wormgear 10 fixed to the sleeve 15 and a worm 8 engageable with the wormgear 10. The worm 8 is supported proximally by a supporting block 13. A micro-adjusting handle 14 is connected coaxially to a distal end of the worm 8. An eccentric sleeve 9 is disposed between the worm 8 and the turntable 2 and is fixedly mounted to a lock-release knob 7. A torsion spring 11 is disposed between the turntable 2 and the lock-release knob 7. The worm 8 has a plurality of engaging recesses 102 corresponding to a plurality of toothed engaging blocks 101 on the base 1. The engaging recesses 102 engage the engaging blocks 101 to fix the wormgear 10 to the base 1.

A supporting sleeve 12 is fixed to the eccentric sleeve 9. Both the supporting sleeve 12 and the eccentric sleeve 9 play the role of eccentric sleeves. The eccentric sleeve 9 encloses the worm 8 and its axis X2 is parallel to and spaced apart from the axis X1 of the worm 8. The eccentric sleeve 9 is rotatably and threadedly connected to the turntable 2.

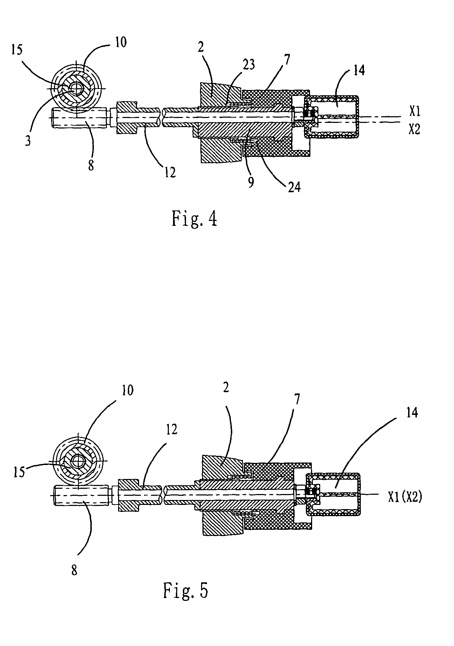

As shown in figures 4 and 5, the eccentric sleeve 9 has a shoulder 21. The lock-release knob 7 has a recess 22 to fit the shoulder 21 to form a unitary member. The torsion spring 11 is received in a retaining groove 23 formed in the turntable 2. One end of the torsion spring 11 is received in the wall of the retaining groove 23. The other end of the torsion spring 11 is received in the wall of a retaining groove 24 formed in the lock-release knob 7.

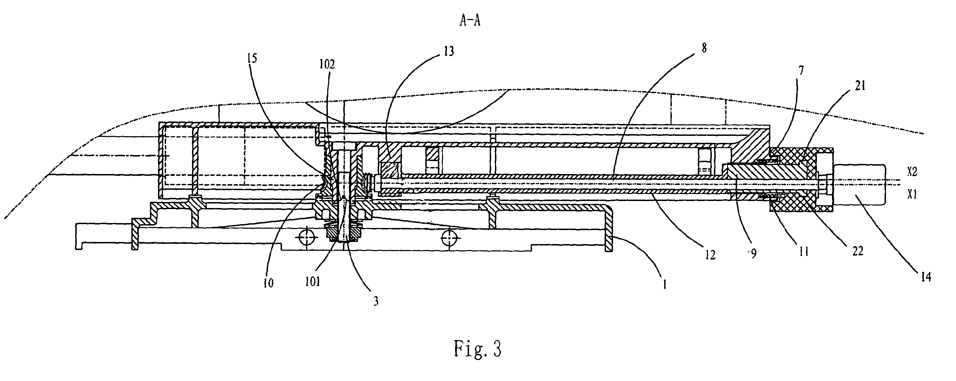

Referring to figures 3 and 4, the first micro-adjusting and locking mechanism 6 is in a locked state which means the turntable 2 is stable and is not manually rotatable about the first rotary shaft 3. In this state, the wormgear 10 and the worm 8 are engaged. In a direction perpendicular to the horizontal surface, the axis X2 of the eccentric sleeve 9 and the axis X1 of the worm 8 are parallel and spaced apart from each other. When (in this position) the turntable 2 needs to be finely adjusted (angle change less than 1°), the micro-adjusting handle 14 is rotated to rotatably actuate the worm 8 so that the wormgear 10 engaged with the worm 8 fine adjusts the angle of the turntable 2.

Referring to figure 4, in order to manually adjust the position of the turntable 2 relative to the base 1, the lock-release knob 7 is rotated to rotate the eccentric sleeve 9 about its axis X2 which rotatably drives the worm 8. As shown in Figure 5, when the eccentric sleeve 9 rotates to a position such that the distance between the axis X2 of the eccentric sleeve 9 and the axis X1 of the worm 8 in the direction perpendicular to the horizontal surface is zero, the worm 8 is disengaged from the wormgear 10 and the micro-adjusting and locking mechanism 6 is in an unlocked state. This means that the turntable 2 is manually rotatable about the first rotary shaft 3. When the turntable 2 is rotated to a preset angle, the lock-release knob 7 is released to its resting position under the restoring force of the torsion spring 11 and the eccentric sleeve 9 and the worm 8 are driven to their locked state. Because the wormgear 10 and the worm 8 are interlockable, the micro-adjusting and locking mechanism 6 of the present invention can be safely and accurately locked.

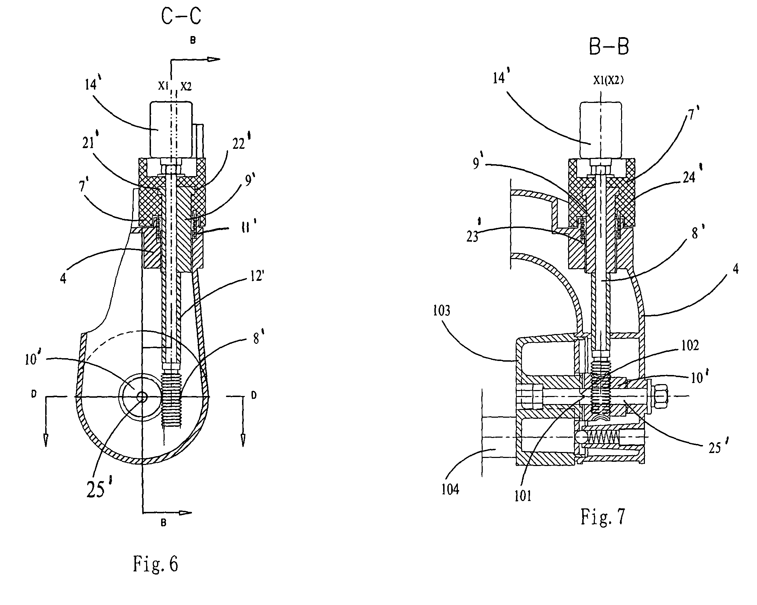

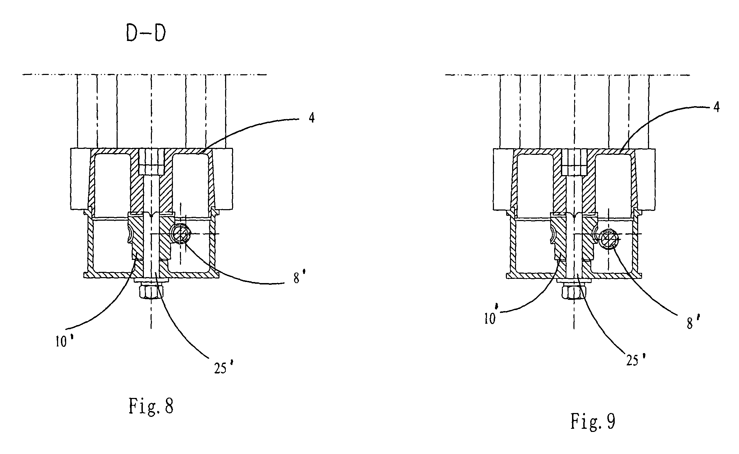

Further referring to figures 6 to 8, the miter saw has a mounting block 103 for fixing one end of a guiding rail 104. A second rotary shaft 25' is fixedly connected to the mounting block 103. The supporting arm 4 is pivotally connected to the second rotary shaft 25'. A second micro-adjusting and locking mechanism 6' is connected to the supporting arm 4 and the second rotary shaft 25'. The second micro-adjusting and locking mechanism 6' is similar to the first micro-adjusting and locking mechanism 6 in structure and function and the same numerals as used in figures 1 to 5 are used in figures 6 to 9 to denote equivalent structural parts. The angle of the supporting arm 4 relative to the turntable 2 is manually adjusted according to the demands of the workpiece and is locked in position by the second micro-adjusting and locking mechanism 6'. The second micro-adjusting and locking mechanism 6' comprises a wormgear 10' which is tightly mounted on the second rotary shaft 25', a worm 8' which is engageable with the wormgear 10', a micro-adjusting handle 14' disposed on one end of the worm 8', a lock-release knob 7', an eccentric sleeve 9' disposed between the worm 8' and the supporting arm 4 and a torsion spring 11' disposed between the supporting arm 4 and the lock-release knob 7. A supporting sleeve 12' is disposed on the worm 8'.

As shown in figure 6, the eccentric sleeve 9' has a shoulder 21'. The lock-release knob 7' has a recess 22' to fit the shoulder 21' to form a unitary member. The torsion spring 11' is received in a retaining groove 23' formed in the supporting arm 4. One end of the torsion spring 11' is received in the wall of the retaining groove 23'. The other end of the torsion spring 11' is received in the wall of a retaining groove 24' formed in the lock-release knob 7'.

When the angle of the supporting arm 4 relative to the turntable 2 needs to be manually adjusted and the supporting arm 4 needs to be locked in a certain position, the second micro-adjusting and locking mechanism 6' may be manipulated in the same way as the first micro-adjusting and locking mechanism 6 described above.

## Claims

1. A miter saw comprising:
a base [1];
a turntable [2] pivotally coupled to the base [1] and capable of adopting a first working state in which the turntable [2] is locked to prevent manual rotary adjustment relative to the base [1] and a second working state in which the turntable [2] is unlocked to permit manual rotary adjustment relative to the base [1];
a first rotary shaft [3] pivotally coupling the turntable [2] with the base [1];
a saw unit [5];
a supporting arm [4] supporting the saw unit [5]; and
a first micro-adjusting and locking mechanism [6] comprising:
a first wormgear [10] fixed to the base [1] and coaxially mounted on the first rotary shaft [3],
a first worm [8] engageable with the first wormgear [10], wherein in the first working state the first worm [8] is engaged with the first wormgear [10] to lock the turntable [2] and in the second working state the first worm [8] is disengaged from the first wormgear [10] to unlock the turntable [2],
a first micro-adjusting handle [14] connected to the first worm [8] and capable of rotary micro-adjustment of the turntable [2] relative to the base [1] in the first working state,
a first eccentric sleeve [9] mounted eccentrically on the first worm [8] such that the axis of the first eccentric sleeve [9] is parallel to and non-coincident with the axis of the first worm [8] and
a first actuator [7] for actuating the first worm [8] between the first working state and the second working state.

2. A miter saw as claimed in claim 1 wherein: the first eccentric sleeve [9] is rotatably connected to the turntable [2].

3. A miter saw as claimed in claim 1 or 2 further comprising: a first elastic element [11] connected between the turntable [2] and the first actuator [7].

4. A miter saw as claimed in claim 3 wherein: the first elastic element [11] is a torsion spring, one end of which is connected to the turntable [2] and the other end of which is connected to the first eccentric sleeve [9] or the first actuator [7].

5. A miter saw as claimed in any preceding claim wherein the first actuator [7] is fixed to the first eccentric sleeve [9].

6. A miter saw as claimed in claim 5 further comprising:
a shoulder [21] formed on the first eccentric sleeve [9] and
a recess [22] formed in the first actuator [7] for latching the shoulder [21].

7. A miter saw as claimed in any preceding claim further comprising:
a sleeve [15] disposed in the turntable [2], wherein the sleeve [15] is slidably mounted on the first rotary shaft [3] and the first wormgear [10] is fixed to the sleeve [15].

8. A miter saw as claimed in claim 1 wherein the first actuator [7] is mounted coaxially on the first eccentric sleeve [9].

9. A miter saw comprising:
a base [1];
a turntable [2] pivotally coupled to the base [1];
a first rotary shaft [3] pivotally coupling the turntable [2] with the base [1];
a saw unit [5];
a supporting arm [4] supporting the saw unit [5], wherein the supporting arm [4] is capable of adopting a first operating state in which the supporting arm [4] is locked to prevent manual rotary adjustment relative to the turntable [2] and a second operating state in which the supporting arm [4] is unlocked to permit manual rotary adjustment relative to the turntable [2]
a second rotary shaft [25] pivotally coupling the supporting arm [4] with the turntable [2]; and
a second micro-adjusting and locking mechanism [6'] comprising:
a second wormgear [10'] fixed to the second rotary shaft [25'] and coaxially mounted on the second rotary shaft [25],
a second worm [8'] engageable with the second wormgear [10'], wherein in the first operating state the second worm [8'] is engaged with the second wormgear [10'] to lock the supporting arm [4] and in the second operating state the second worm [8'] is disengaged from the second wormgear [10'] to unlock the supporting arm [4],
a second micro-adjusting handle [14'] connected to the second worm [8'] and capable of rotary micro-adjustment of supporting arm [4] relative to the turntable [2] in the first operating state,
a second eccentric sleeve [9'] mounted eccentrically on the second worm [8'] such that the axis of the second eccentric sleeve [9'] is parallel to and non-coincident with the axis of the second worm [8'] and
a second actuator [7'] connected to the second eccentric sleeve [9'] for actuating the second worm [8'] between the first operating state and the second operating state.

10. A miter saw as claimed in claim 9 wherein: the second eccentric sleeve [9'] is rotatably connected to the turntable [2].

11. A miter saw as claimed in claim 9 or 10 further comprising: a second elastic element [11] connected between the supporting arm [4] and the second actuator [7'].

12. A miter saw as claimed in claim 11 wherein: the second elastic element [11'] is a torsion spring, one end of which is connected to the turntable [2] and the other end of which is connected to the second eccentric sleeve [9'] or the second actuator [7'].

13. A miter saw as claimed in any of claims 9 to 12 wherein the second actuator [7'] is fixed to the second eccentric sleeve [9'].

14. A miter saw as claimed in claim 13 further comprising:
a shoulder [21'] formed on the second eccentric sleeve [9'] and
a recess [22'] formed in the second actuator [7'] for latching the shoulder [21'].

15. A miter saw as claimed in claim 9 wherein the second actuator [7'] is mounted coaxially on the second eccentric sleeve [9'].

16. A miter saw as claimed in claim 9 wherein: a supporting sleeve [12'] is disposed on the second worm [8'].

17. A miter saw comprising: a base [1], a turntable [2], a first rotating shaft [3] joined the base [1] with the turntable [2], a supporting arm [4] and a saw unit [5], **characterized in that**: it further comprises a micro-adjusting and locking mechanism [6], said micro-adjusting and locking mechanism [6] comprising a wormgear [10] which is fixed to said base [1], a worm [8], a micro-adjusting handle [14] which is connected to said worm [8], an eccentric sleeve [9], a lock-release knob [7] which is connected to said eccentric sleeve [9], and an elastic element [11], said wormgear [10] is coaxially disposed on said first rotating shaft [3], said worm [8] is rotatably inserted into said eccentric sleeve [9], an axis of said worm [8] is parallel to but not overlapped with an axis of said eccentric sleeve [9], said elastic element [11] is disposed between said turntable [2] and said lock-release knob [7], said worm [8] is engaged with said wormgear [10] when said micro-adjusting and locking mechanism [6] is in a first working status, said worm [8] is disengaged from said wormgear [10] when said micro-adjusting and locking mechanism [6] is in a second working status.

18. A miter saw comprising a base [1], a turntable [2], a second rotating shaft [25], a supporting arm [4] which is pivotally connected to said second rotating shaft [25] and a saw unit [5], **characterized in that**: it further comprises a micro-adjusting and locking mechanism [6'], said micro-adjusting and locking mechanism [6'] comprising a wormgear [10'] which is fixed to said second rotation shaft [25], a worm [8'], a micro-adjusting handle [14'] which is disposed on said worm [8'], an eccentric sleeve [9'], a lock-release knob [7'] which is connected to said eccentric sleeve [9'], an elastic element [11'] which is disposed between said supporting arm [4] and said lock-release knob [7'], said wormgear [10'] is coaxially disposed on said second rotating shaft [25], said worm [8'] is rotatably inserted into said eccentric sleeve[9'], an axis of said worm [8'] is parallel to but not overlapped with axis of said eccentric sleeve [9'], said worm [8'] is engaged with said wormgear [10'] when said micro-adjusting and locking mechanism [6'] is in a first working status, said worm [8'] is disengaged from said wormgear [10'] when said micro-adjusting and locking mechanism [6'] is in a second working status.
